# EUROPEAN PATENT APPLICATION

(11) **EP 0 531 747 A1**
(43) Date of publication of application: **17.03.1993**
(21) Application number: 92113987.9
(22) Date of filing: 17.08.1992
(51) Int. Cl.: B01D 33/11, B01D 33/46, B01D 33/50

(54) **A self-cleaning strainer**

(30) Priority: 22.08.1991 US 748659; 17.06.1992 US 900190
(71) Applicant: GA INDUSTRIES, INC., Mars, Pennsylvania 16046 (US)
(72) Inventor: Lescovich, Joseph E., Pittsburgh, Pennsylvania 15205 (US); Huggins, Warren L., Gibsonia, Pennsylvania 15044 (US)
(74) Representative: Frankland, Nigel Howard

(57) **Abstract**

A self-cleaning strainer(1) comprises a vertically disposed housing(3) which contains a rotatable strainer basket(19). The housing has an open top(7), closed by a closure plate(13), an inlet(15) adjacent the top of the housing(3) and an outlet(17) adjacent a closed bottom(9) of the housing, the closed bottom having a flush discharge opening(11). The components(31) used to rotate the strainer basket are disposed outside the flow of any water containing particulates that enters the housing. Cleaning devices(71) such as a scraper blade(73) supported in the strainer basket(19), a rotatable brush(101) supported in the strainer basket, and a water jet manifold(131) disposed between the housing sidewall(5) and the sidewall(21) of the strainer basket are used to clean the rotatable strainer basket. In one embodiment, a hollow backwash conduit(273) with a passage(285) through the sidewall is positioned adjacent the inner surface of the strainer basket(219) and communicates with a sealable aperture(279) in the wall of the housing(203). Upon opening of the aperture, cleaned water flows through the side wall of the strainer basket, removing particulates therefrom, and out the hollow backwash conduit(273). An intermittently rotatable brush(323) is also provided to brush the inner surface of the strainer basket.

## Description

**THE PRESENT INVENTION** relates to a strainer apparatus and more particularly to a self-cleaning strainer used to remove particulates from water that is to be used in industrial installations.

In many industrial installations, a large supply of water is often needed for cooling, flushing, or other applications. Such a large supply of water is usually taken from a body of water, such as a river, stream, pond or other water source, which contains particulate material, such as leaves, twigs, stones and the like, that would be harmful to industrial equipment and which particulate materials must be removed. In order to remove such particulates, an initial bar screen may be used to filter out the largest articles, while other particulates are fed to a straining apparatus which may be a rotary strainer containing a rotary basket screen or other device to remove particulates.

According to this invention there is provided a self-cleaning strainer comprising a vertically disposed housing having an upstanding side wall, an open top and a bottom wall; said housing having an inlet in the side wall for a liquid containing particulates, adjacent said open top, an outlet in the side wall adjacent said bottom wall for clean liquid, and a flush discharge opening in said bottom wall; a cover plate sealingly closing the open top of said hosing; a rotatable strainer basket, having a cylindrical foraminous side wall with an inner surface and an open top and bottom, with openings through said cylindrical side wall for flow of liquid therethrough, disposed in said housing, spaced from said side wall of said housing and disposed below said inlet, such that liquid containing particulates entering said inlet passes into said strainer basket and outwardly through said openings to remove said particulates, and clean liquid is directed through said outlet; means for rotating said strainer basket in said housing, said means for rotating being positioned out of the flow of liquid containing particulates, and means for cleaning the inner surface of the cylindrical side wall of said strainer basket to remove particulates which are collected thereon.

Preferably said means for cleaning the inner surface of the cylindrical side wall of said strainer basket comprises a scraper blade, positioned to contact said inner surface, supported in said strainer basket in said housing.

Conveniently the strainer includes means for varying the pressure of contact of said scraper blade on said inner surface.

Advantageously said means for cleaning the inner surface of the cylindrical side wall of said strainer basket comprises a rotatable bristled brush, positioned such that the bristles on said brush contact said inner surface, supported in said strainer basket in said housing, said rotatable brush being rotatable in a direction opposite the rotation of said strainer basket.

In one embodiment said rotatable bristled brush is mounted eccentrically in a brushing.

Conveniently said means for cleaning the inner surface of the cylindrical side wall of said strainer basket comprises a water jet manifold, positioned in the spacing between said cylindrical side wall and said side wall of said housing, said water jet manifold having nozzles through which water is sprayed through said openings in the cylindrical side wall of said strainer basket.

Conveniently said means for cleaning the inner surface of the cylindrical side wall of said strainer basket comprises a scraper blade, positioned to contact said inner surface, and a rotatable bristled brush, positioned such that the bristles on said brush contact said inner surface, said scraper blade and said bristled brush supported in said strainer basket in said housing, with said bristled brush located adjacent and beyond said scraper blade in the direction of rotation of said strainer basket.

The strainer may include a water jet manifold, positioned in the spacing between said cylindrical side wall and said side wall of said housing, said water jet manifold having nozzles through which water is sprayed through said openings in the cylindrical side wall of said strainer basket.

Preferably the area of said space between the side wall of said housing and the cylindrical side wall of said strainer basket is greater than the cross-sectional area of said inlet.

Advantageously said strainer basket has a top annular shoulder on said cylindrical side wall, and an inwardly directed flange is provided on the side wall of said housing which contacts said shoulder to form a closure therebetween, said top annular should having a downwardly extending lip having sprockets thereon extending outwardly therefrom.

Preferably said means for rotating said strainer basket comprises a sprocket wheel and a chain engaged with said sprocket wheel and the sprockets of the annular shoulder of said strainer basket.

Preferably the strainer includes means for adjusting the position of said sprocket wheel to tighten or loosen the engagement of said chain with the sprockets on the downwardly extending lip of the annular shoulder of said strainer basket.

Conveniently said means for cleaning includes a hollow backwash conduit having an outer wall defining a chamber, disposed in said rotatable strainer basket adjacent said inner surface thereof, said hollow backwash conduit having a passage through the outer wall thereof facing said inner surface; an aperture in a wall of said housing communicating with said chamber of said hollow backwash conduit, and means to seal aperture in said wall of said housing.

Advantageously said passage through the outer wall of said hollow backwash conduit extends substantially the length of said conduit within said rotatable strainer basket.

Preferably the strainer includes a scraper blade on one side of said passage of said hollow backwash conduit, positioned to contact said inner surface and an extension member on the other side of said passage on said backwash conduit extending towards said inner surface, said scraper blade and extension member spaced from each other to form a channel therebetween communicating through said passage with the chamber of said hollow backwash conduit.

Preferably at least one of said scraper blades and said extension member is adjustable secured relative to the other to enable adjustment of the width of said channel.

Conveniently said scraper blade has a base and said base is laterally adjustably secured to said hollow backwash conduit.

Advantageously spacers are provided between said scraper blade and said extension member to stabilize the same in spaced relationship.

Conveniently the strainer includes a means for varying the pressure of contact of said scraper blade on said inner surface.

The strainer may include means for regulating the volume of flow of said backwash water through said hollow backwash conduit.

Preferably the cleaner includes a rotatable bristled brush, positioned such that the bristles on said brush contact said inner surface, supported in said strainer basket in said housing.

Preferably said rotatable bristled brush is intermittently rotatable.

Conveniently said rotatable bristled brush is mounted eccentrically in a housing.

The invention also provides a self-cleaning strainer comprising a vertically disposed housing having an upstanding side wall, an open top and a bottom wall; said housing having an inlet in the side wall for a liquid containing particulates, adjacent said open top, an outlet in the side wall adjacent said bottom wall for clean liquid, a flush discharge opening in said bottom wall and an inwardly directing flange on said sidewall; a cover plate sealingly closing the open top of said housing, a rotatable strainer basket, having a cylindrical foraminous side wall with an inner surface and an open top and bottom, with openings through said cylindrical side wall for flow of liquid therethrough, disposed in said housing, spaced from said side wall of said housing and disposed below said inlet, said strainer basket having a top annular shoulder with a downwardly extending lip thereon having sprockets extending outwardly therefrom, which annular shoulder contacts said inwardly directed flange on the sidewall of said housing to form a closure therebetween, such that liquid containing particulates entering said inlet passes into said strainer basket and outwardly through said openings to remove said particulates, and clean liquid is directed through said outlet; means for rotating said strainer basket in said housing, out of the flow of liquid containing particulates comprising a rotatable sprocket wheel, and a chain engaged with said sprocket wheel and said sprockets on said strainer basket, and means for cleaning the inner surface of the cylindrical side wall of said strainer basket to remove particulates which are collected thereon.

The invention further provides a self-cleaning strainer comprising a vertically disposed housing having an upstanding side wall, an open top and a bottom wall; said housing having an inlet in the side wall for a liquid containing particulates, adjacent said open top, an outlet in the side wall adjacent said bottom wall for clean liquid, and a flush discharge opening in said bottom wall; a cover plate sealingly closing the open top of said hosing; a rotatable strainer basket, having a cylindrical foraminous side wall with an inner surface and an open top and bottom, with openings through said cylindrical side wall for flow of liquid therethrough, disposed in said housing, spaced from said side wall of said housing and disposed below said inlet, such that liquid containing particulates entering said inlet passes into said strainer basket and outwardly through said openings to remove said particulates, and clean liquid is directed through said outlet; means for rotating said strainer basket in said housing, said means for rotating being positioned out of the flow of liquid containing particulates; and means for cleaning the inner surface of the cylindrical side wall of said strainer basket to remove particulates which are collected thereon, said means for cleaning including a hollow backwash conduit having an outer wall defining a chamber disposed in said rotatable strainer basket adjacent said inner surface thereof, said hollow backwash conduit having a passage through the outer wall thereof facing said inner surface; a scraper blade on one side of said passage on said hollow backwash conduit, positioned to contact said inner surface, and an extension member on the other side of said passage on said hollow backwash conduit extending towards said inner surface, said scraper blade and extension member spaced from each other to form a channel therebetween communicating through said passage with the chamber of said hollow backwash conduit; an aperture in a wall of said housing communicating with said chamber of said hollow backwash conduit, and means to seal said aperture in said wall of said housing.

The invention will become more readily apparent from the following description of preferred embodiments thereof shown, by way of example only, in the accompanying drawings wherein:
FIGURE 1 is a vertical cross-section through a self-cleaning strainer of the present invention, taken generally along lines I-I of Figure 4, showing the rotatable brush and water jet manifold cleaning device,
FIGURE 2 is a vertical cross-section through the self-cleaning strainer as shown in Figure 1, with the rotatable brush removed to better show the scraper blade in position,
FIGURE 3 is an elevational view of the self-cleaning strainer looking towards the outlet in the sidewall of the housing,
FIGURE 4 is a cross-sectional view of the self-cleaning strainer of the present invention taken along lines IV-IV of Figure 3,
FIGURE 5 is a top plan view of the self-cleaning strainer of the present invention with the motor removed to show the means for rotating a brush and adjusting as scraper blade,
FIGURE 6 is a partial cross-sectional elevational view of another embodiment of the self-cleaning strainer of the present invention which is backwashable,
FIGURE 7 is a horizontal cross-sectional view of the backwashable self-cleaning strainer of Figure 6,
FIGURE 8 is a top plan view of the backwashable self-cleaning strainer of Figure 6 with the motor removed;
FIGURE 9 is a horizontal cross-sectional view of an embodiment of the hollow backwash conduit, scraper blade and extension member of the backwashable self-cleaning strainer of Figures 6 to 8, and
FIGURE 10 is an elevational view, partly in cross-section, of a portion of the hollow backwash conduit, scraper blade and extension member of the backwashable self=cleaning strainer of Figures 6 to 8.

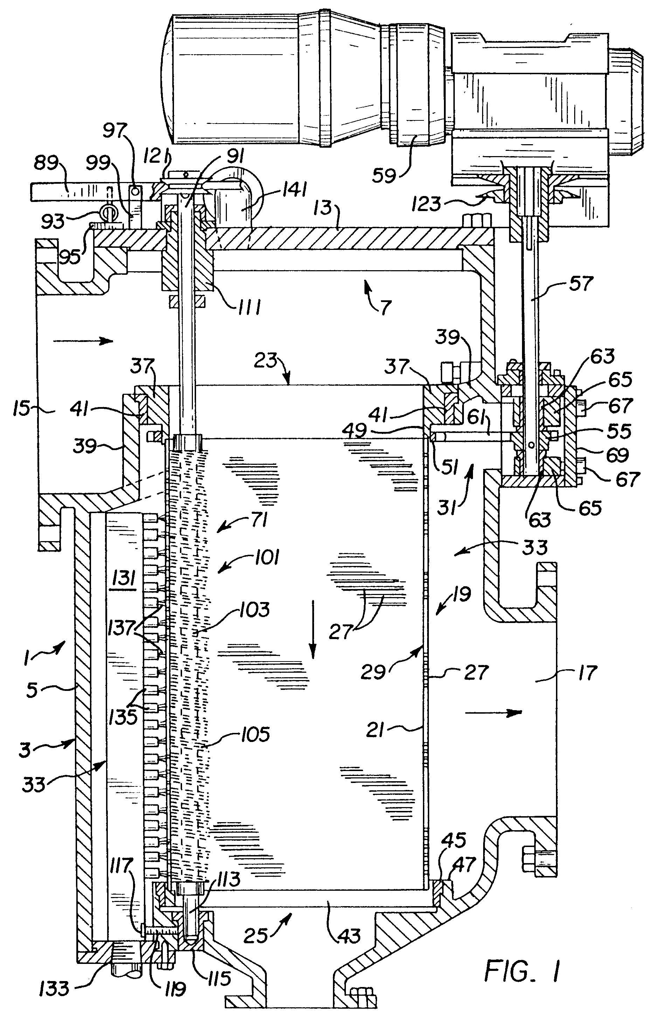

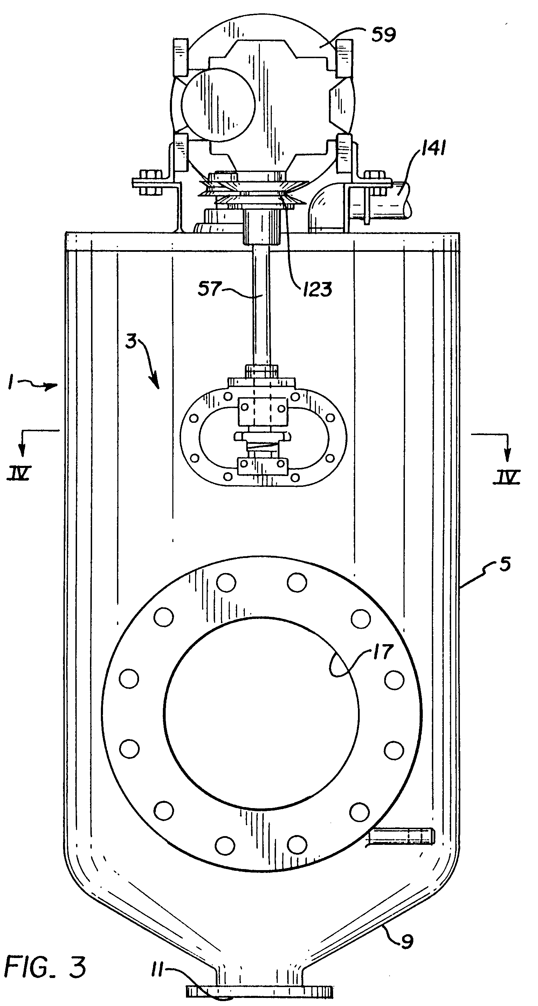

Referring now to Figures 1 to 5, one embodiment of a self-cleaning strainer 1 of the present invention is illustrated,
having a vertically disposed housing 3 which has an upstanding side wall 5, an open top 7 and a bottom wall 9. A flush discharge opening 11 is provided in the bottom wall 9 which is attachable to a discharge valve (not shown), such as a shear gate valve. A cover plate 13 sealingly closes the open top 7 of the housing 3. An inlet 15 is provided in the side wall 5 for charging to the housing of a liquid containing particulates, the inlet 15 positioned adjacent the open top 7 of the housing 3. An outlet 17 is also provided in the side wall 5 adjacent the bottom wall 9 for discharge from the housing 3 of clear liquid after particulates have been removed therefrom. Disposed in the housing 3 is a rotatable strainer basket 19 which has a cylindrical foraminous side wall 21, an open top 23 and an open bottom 25. The cylindrical foraminous side wall 21 has openings 27 therethrough such that liquid may pass through the side wall while particulates will be removed from the liquid and collected on the inner surface 29 of the foraminous side wall 21. The sidewall 21 of the strainer basket may be formed from a mesh-like material, a perforated sheet material, a series of spaced bars, as illustrated, or other material forming a foraminous side wall for the basket.

A means 31 is provided for rotating the strainer basket 19, which means 31 is positioned out of the flow of liquid containing particulates, such as in a spacing 33 between the upstanding sidewall 5 of the housing 3 and the cylindrical foraminous sidewall 21 of the strainer basket 19. As illustrated, the strainer basket 19 preferably has an upper portion 35 that has a shoulder 37 which extends outwardly therefrom, while an inwardly directed flange 39 is provided on the upstanding sidewall 5 of the housing 3, with the shoulder 37 and flange 39 rotatably sealingly engaged through an upper bearing 41. The strainer basket 19 also has a lower portion 43 which is rotatably sealingly engaged through a lower bearing 45 with an upwardly extending flange 47 on the bottom wall 9 of the housing 3. In order to ensure that no restriction to flow of the liquid through the self-cleaning strainer occurs, the area of the spacing 33 between the upstanding sidewall 5 of the housing and the cylindrical foraminous sidewall 21 of the strainer basket 19 is greater than the cross-sectional area of the opening of the inlet 15.

The upper portion 35 of the strainer basket 21 has a lip 49 extending downwardly therefrom, which lip 49 has outwardly extending sprockets 51. A drive housing 53 is carried by the housing 3, which contains a sprocket wheel 55 connected to a motor shaft 57, the motor shaft in turn connected to a motor 59 for rotation of the shaft and sprocket wheel 55. A chain 61 engages with the sprocket wheel 55 and the sprockets 51 on the downwardly extending lip 49 of the upper portion 34 of the strainer basket 19.

The shaft 57 is mounted in spaced bearings 63 disposed in slidable blocks 65 and adjusting screws 67 may be threaded through an end wall 69 of the drive housing 53 so as to loosen or tighten the contact of the chain 61 with the sprockets 51.

In operation of the self-cleaning strainer 1, water containing particulates is charged to the housing 3 through inlet 15 and flows, as shown by the arrows in Figure 1, downwardly through the open top 23 of the strainer basket 19. The water is then directed through the openings 27 in the sidewall 21 of the strainer basket and clean water is discharged from the housing 3 through outlet 17. Particulates removed from the water are collected on the inner surface 29 of the sidewall 21 of the strainer basket 19. The inner surface 29 of the sidewall 21 of the strainer basket 19 must be periodically cleaned and a means 71 for cleaning the inner surface 29 is provided.

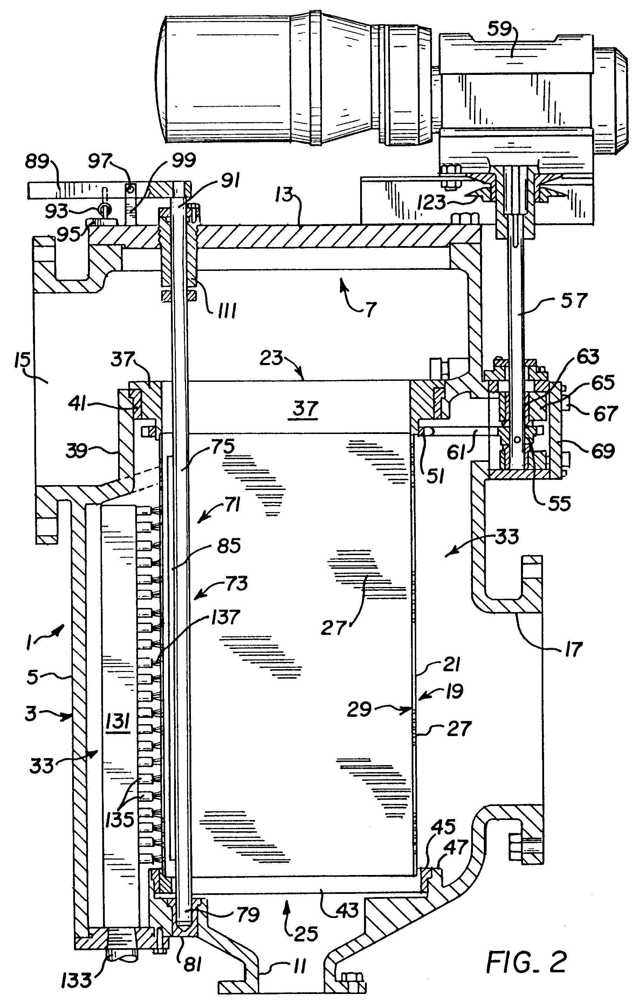

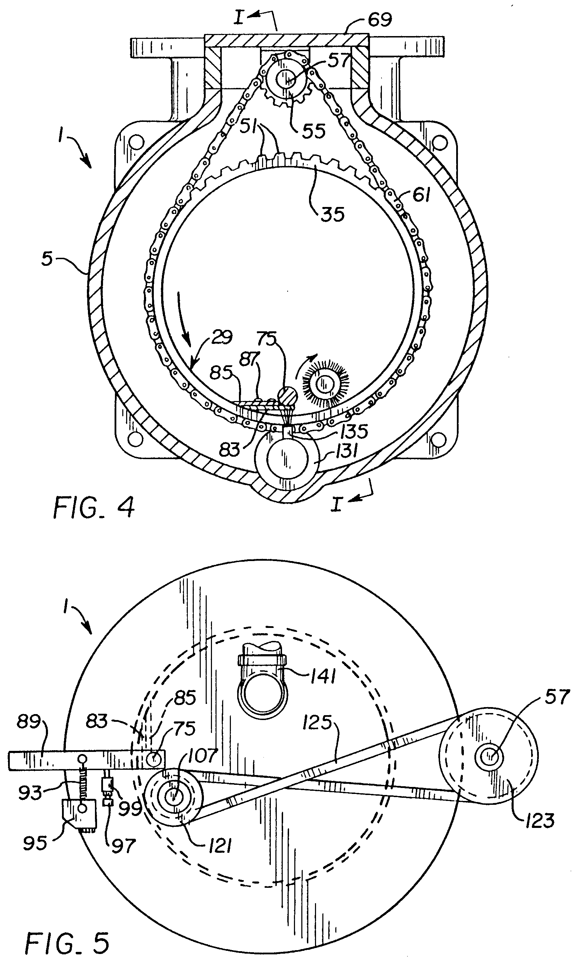

The means 71 may comprise a scraper blade, a rotatable brush, or a plurality of jet nozzles, or any combination of these cleaning components. As best shown in Figures 2 and 4, where the means for cleaning the inner surface 29 is a scraper blade, a scraper blade 73 is supported in the strainer basket 19 and is positioned to contact the inner surface 29 of the sidewall 21. The scraper blade 73 has a support shaft 75 which extends downwardly through a bushing 77 in the closure plate 13, with the support shaft 75 lower end 79 disposed in a collar 81 in bottom wall 9 of the housing 3. A blade support 83 is secured to the support shaft 75 and a blade 85 is releasably secured to the blade support 83, such as by screws or bolts 87. The tension of the blade portion 85 against inner surface 29 of the side wall 21 is adjustable through use of an adjustment bar 89 attached to the upper end 91 of the support shaft 75, which adjustment bar 89 is held under tension by use of a spring 93 attached to the adjustment bar 89 and a spaced spring stop 95. An adjustment screw 97, carried in a post 99, on the cover plate 13, contacts the adjustment bar 89 and controls the pressure of contact of the blade 85 on the inner surface 29 of the sidewall 21 of strainer basket 19.

In an embodiment where the means for cleaning the inner surface 29 is a rotatable brush, as best shown in Figures 1, 4 and 5, a rotatable brush 101 is supported in the strainer basket 19 and is positioned to contact the inner surface 29 of the sidewall 21. The rotatable brush 101 comprises a bristled portion 103, having bristles 105, carried by a brush shaft 107, the upper portion 109 of the brush shaft 107 passing through an eccentric bushing 111 in the cover plate 13, while the lower portion 113 thereof is supported in a lower brush shaft bearing 115 in the bottom wall 9 of the housing 3. The lower brush shaft bearing 115 is an eccentric bearing secured in position by a set screw 117 engaged in threaded aperture 119 through the bottom wall 9 of the housing 3. A first sheave 121 is secured to the upper portion 109 of the brush shaft 107, while a second sheave 123 is secured to the motor shaft 57. A belt 125 is engaged in a figure-eight manner with sheaves 123 and 121, such that rotation of the motor shaft 57 will rotate the strainer basket 19 in one direction while, at the same time, the brush shaft 107 will rotate the bristled portion 103 of the brush 101 in the opposite direction. The bristled portion 103 of the rotatable brush 101 may be of various configurations but, as illustrated in Figure 1, the bristled portion 103 preferably has bristles 105 in a spiral downwardly directed pattern which will direct particulates downwardly towards the flush discharge opening 11 of the housing 3. The bristled portion 103 of the brush may be provided in a wide range of bristle tuft configurations, so as to meet particular conditions of media for which the strainer is being used.

In the embodiment of the self-cleaning strainer 1 of the present invention, where both a scraper blade 73 and a rotatable brush 101 are provided to clean the inner surface 29 of the sidewall 21 of the strainer basket 19, the brush 101 is located, as illustrated in Figure 4, adjacent and beyond the scraper blade 75 in the direction of rotation of the strainer basket 19.

The bristled portion 103 of the rotatable brush 101 is first positioned such that the outer ends of the bristles 105 lightly touch the inner surface 29 and, when wearing of the bristles 105 occurs, the eccentric bearings enable the rotatable brush 101 to be moved relative to the inner surface 29 to provide for subsequent contact of the bristles 105 therewith.

In an embodiment where the means for cleaning the inner surface 29 is a plurality of jet nozzles, a water jet manifold 131 is positioned in the spacing 33 between the upstanding side wall 5 of the housing 3 and the sidewall 21 of the strainer basket 19, with an inlet 133 secured to the water jet manifold 131 and a source of pressurized water (not shown), which may pass through the bottom wall 9 of the housing 3. Nozzles 135 are provided on the water jet manifold 131, which nozzles face the cylindrical side wall 21 of the strainer basket 19, such that pressurized water fed, to the water jet manifold 131 will be discharged through the nozzles 135 and directed as water sprays 137 through the openings 27 in the sidewall 21 of strainer basket 19.

A flush water conduit 141, attachable to a flush water pump (not shown) is provided which connects with an opening 143 in the cover plate 13 to charge flush water through the cover plate 13 and downwardly through the strainer basket 19.

Cleaning of the self-cleaning strainer is effected when desired, usually when a pressure drop is noted between the inlet 15 and outlet 17 of the housing 3, such as a pressure drop of about 7.40 n/m² (5 pounds per square inch) or more, indicating plugging of the openings 27 of the cylindrical foraminous sidewall 21 of the strainer basket 19. When cleaning is desired, an automatic control system may be used to start the motor 59 which, through shaft 57, turns the sprocket wheel 55 and chain 61 which rotates the strainer basket 19, while at the same time turns the belt 125 which rotates the rotatable brush 101 in the opposite direction of rotation of the strainer basket 19, such that the bristled portion 105 brushes the inner surface 29 of the sidewall 21 of the strainer basket 9. As the strainer basket 19 rotates, the blade 85 of scraper blade 73 scrapes along the inner surface 29 immediately following such shearing. The water sprays 137, from nozzles 135, of the slater jet manifold may also be used to flush particulates from the openings 27 in the sidewall 21 into the interior of the strainer basket 19.

The loosened particulates fall through the open bottom 25 of the strainer basket 19 and are discharged through the flush discharge opening 11. The flush discharge opening 11 may be open to an off-take continuously or a shear gate valve may be used to close the same when desired. If more flushing of the strainer basket and flush discharge opening 11 is desired, flush water may be charged through flush water conduit 141 downwardly through the strainer basket 19. When the strainer basket 19 has been cleaned, the motor 59 is shut down and the rotation of the strainer basket 19 and rotatable brush 101 terminated. The self cleaning strainer may then be used to clean further particulate-laden water.

A cleaning operation may also be effected without interruption of service of the strainer by simply opening a shear gate valve attached to the flush discharge opening 11.

Also, the strainer may be cleaned by temporarily taking the strainer out of service by closing a valve in a conduit leading to inlet 15, as well as a valve in a conduit leading from outlet 17 and then opening a shear gate valve attached to the flush discharge opening 11. Flush water is then charged through flush water conduit 141 downwardly through the strainer basket 19 which will flush out debris through the flush discharge opening 11.

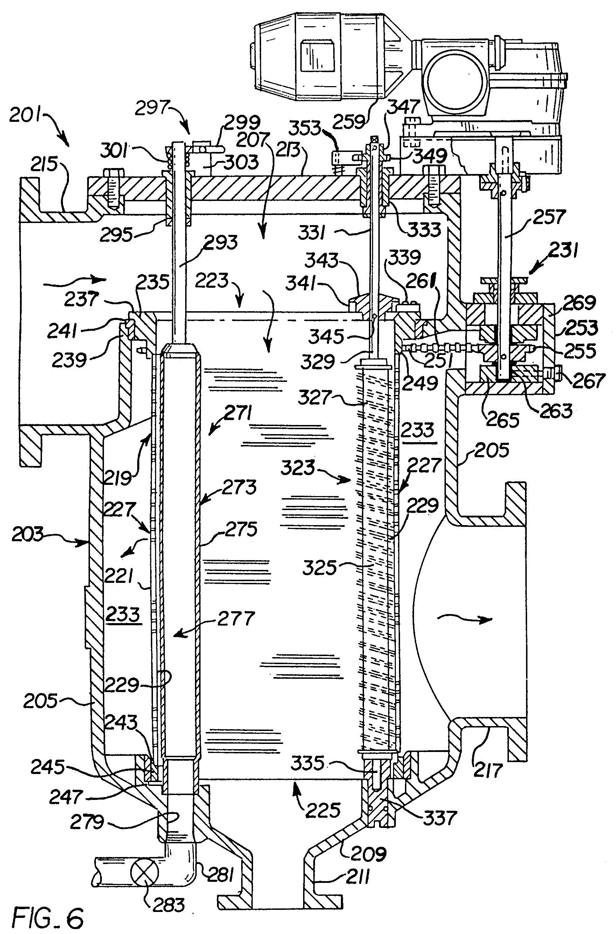

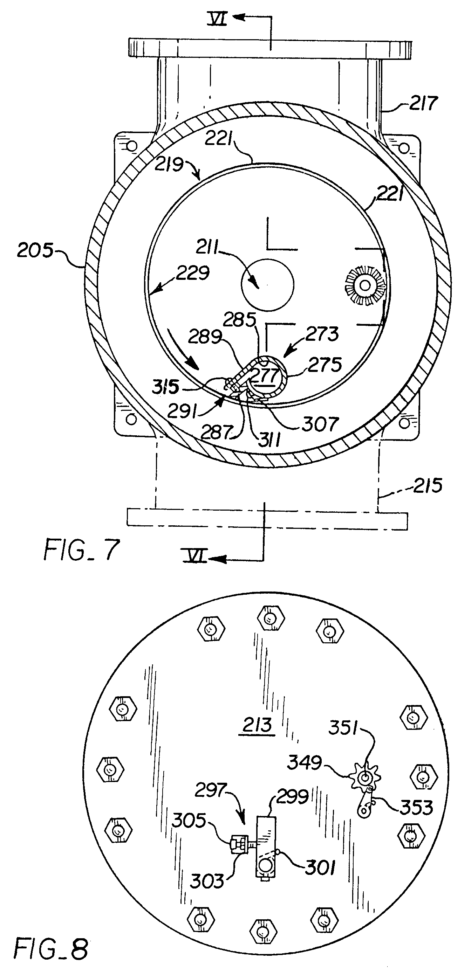

Referring now to Figures 6-10, another embodiment of the self-cleaning strainer is illustrated which includes a backwash conduit for backwashing of the wall of the strainer basket, and wherein the rotatable brush is adapted for intermittent rotation.

Referring now to Figures 6-10, an embodiment of a self-cleaning strainer 201 of the present invention is illustrated, having a vertically disposed housing 203 which has an upstanding side wall 205, an open top 207 and a bottom wall 209. A flush discharge opening 211 is provided in the bottom wall 209 which is attachable to a discharge valve (not shown), such as a shear gate valve. A cover plate 213 sealingly closes the open top 207 of the housing 203. An inlet 215 is provided in the side wall 205 for charging to the housing of a liquid containing particulates, the inlet 215 positioned adjacent the open top 207 of the housing 203. An outlet 217 is also provided in the side wall 205 adjacent the bottom wall 209 for discharge from the housing 203 of clear liquid after particulates have been removed therefrom. Disposed in the housing 203 is a rotatable strainer basket 219 which has a cylindrical foraminous side wall 221, an open top 223 and an open bottom 225. The cylindrical foraminous side wall 221 has openings 227 therethrough such that liquid may pass through the side wall while particulates will be removed from the liquid and collected on the inner surface 229 of the foraminous side wall 221. The side wall 221 of the strainer basket may be formed from a mesh-like material, a perforated sheet material, a series of spaced bars, as illustrated, or other material forming a foraminous side wall for the basket.

A means 231 is provided for rotating the strainer basket 219, which means 231 is positioned out of the flow of liquid containing particulates, such as in a spacing 233 between the upstanding sidewall 205 of the housing 203 and the cylindrical foraminous sidewall 221 of the strainer basket 219. As illustrated, the strainer basket 219 preferably has an upper portion 235 that has a shoulder 237 which extends outwardly therefrom, while an inwardly directed flange 239 is provided on the upstanding sidewall 205 of the housing 203, with the shoulder 237 and flange 239 rotatably sealingly engaged through an upper bearing 241. The strainer basket 219 also has a lower portion 243 which is rotatably sealingly engaged through a lower bearing 245 with an upwardly extending flange 247 on the bottom wall 209 of the housing 203. In order to ensure that no restriction to flow of the liquid through the self-cleaning strainer occurs, the area of the spacing 233 between the upstanding side wall 205 of the housing and the cylindrical foraminous side wall 221 of the strainer basket 219 is greater than the cross-sectional area of the opening of the inlet 215.

The upper portion 235 of the strainer basket 221 has a lip 249 extending downwardly therefrom, which lip 249 has outwardly extending sprockets 251. A drive housing 253 is carried by the housing 203, which contains a sprocket wheel 255 connected to a motor shaft 257, the motor shaft in turn connected to a motor 259 for rotation of the shaft 257 and sprocket wheel 255. A chain 261 engages with the sprocket wheel 255 and the sprockets 251 on the downwardly extending lip 249 of the upper portion 235 of the strainer basket 219.

The shaft 257 is mounted in a bearing 263 disposed in a slidable block 265 and adjusting screw 267 may be threaded through an end wall 269 of the drive housing 253 so as to loosen or tighten the contact of the chain 261 with the sprockets 251.

In operation of the self-cleaning strainer 201, water containing particulates is charged to the housing 203 through inlet 215 and flows, as shown by the arrows in Figure 6, downwardly through the open top 223 of the strainer basket 219. The water is then directed through the openings 227 in the sidewall 221 of the strainer basket and clean water is discharged from the housing 203 through outlet 217. Particulates removed from the water are collected on the inner surface 229 of the sidewall 221 of the strainer basket 219. The inner surface 229 of the sidewall 221 of the strainer basket 219 must be periodically cleaned and a means 271 for cleaning the inner surface 229 is provided.

The means 271 for cleaning the inner wall 229 of the strainer basket 219 comprises a hollow backwash conduit 273 having an outer wall 275 which defines a chamber 277, the hollow backwash conduit 273 disposed in the rotatable strainer basket 219 adjacent the inner surface 229 thereof. An aperture 279 is formed in the wall of the housing 203, such as through bottom wall 209, with the hollow backwash conduit 273 resting on bottom wall 209, and with the aperture 279 in communication with the chamber 277. The aperture is sealed, such as by a threaded pipe 281 threadedly engaged with the bottom wall 209 of the housing 203, which pipe 281 contains a shut-off valve 283. The hollow backwash conduit 273 preferably extends the entire length of the strainer basket 219. A passage 285 is formed through the outer wall 275 of the hollow backwash conduit 273 and preferably faces the inner surface 229 of the strainer basket 219 and preferably extends substantially the length of said hollow backwash conduit 273 within the strainer basket 219.

During operation of the strainer 201, water containing particulates passes from inlet 215 through the open top 223 of the strainer basket 219 into the confines of the strainer basket 219, with the water flowing through the foraminous side wall 221 through openings 227 and into the chamber 233 between the strainer basket 219 and the side wall 205 of the housing 203 before discharge through the outlet 217 for use. The particulate material in the water entering the strainer is collected on the inner surface 229 of the strainer basket 219 and must be periodically removed. The pressure within the confines of the strainer basket 219 and in the spacing 233 between the strainer basket 219 and the wall 205 of the housing 203 is increased due to forcing of the water therethrough. Upon opening the valve 283, to open flow through aperture 279, to the outside atmosphere, and rotation of the strainer basket 219, a reduced pressure is formed in the chamber 277 of the hollow backwash conduit 273 relative to the spacing 233 between the strainer basket 219 and the wall 205 of housing 203, which forces clean water from the spacing 233 back through the foraminous side wall 221 of the strainer basket 219 in a flow pattern opposite that of normal operational flow. By such reversal of the flow pattern, particulate material collected on the inner surface 229 of the strainer basket is removed and carried by water through the passage 285, into chamber 277 of the hollow backwash conduit 273 and out of the aperture 279 for discharge from the strainer 201, or it may be directed into the bottom section of the housing 203 from which it is subsequently discharged. The rate of flow and amount of backwash water from the strainer may be controlled by adjusting the valve 283 so as to control flow of water from the chamber 277 through pipe 281.

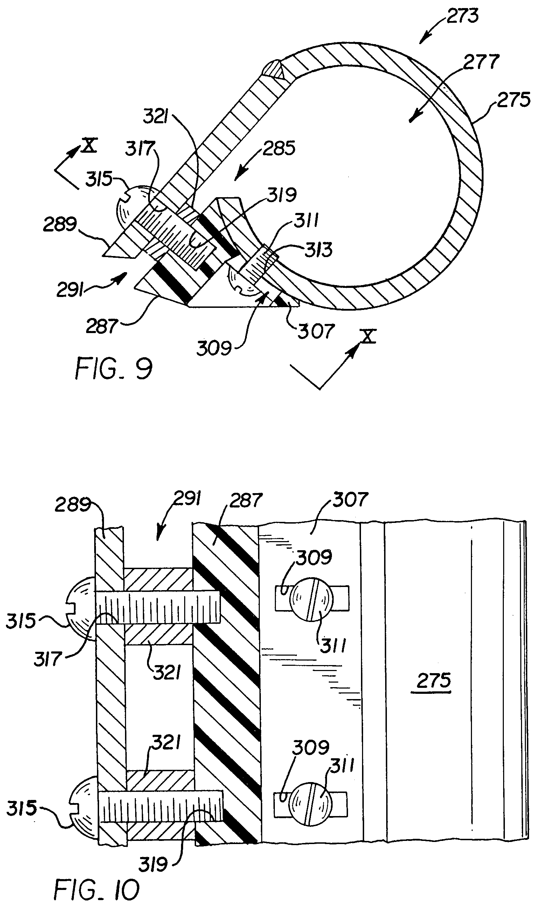

In order to assist in removal of particulate material from the inner surface 229 of the strainer basket 219, a shear member or scraper blade 287 is provided on the hollow backwash conduit 273 on one side of the passage 285, which is positioned to contact the inner surface 229 and scrape particulate material therefrom. The scraper blade 287 is preferably formed from a high-wear, low friction type material, such as an ultra-high molecular weight polymeric material. An extension member 289, such as a plate, is provided on the other side of the passage 285, which extends towards the inner surface 229, at a position spaced from the scraper blade 287, in the direction opposite the direction of rotation of the strainer basket 219 (indicated by the arrow in Figure 6), so as to form a channel 291 therebetween, which channel 291 communicates through the passage 285 with the chamber 277 in the hollow backwash conduit 273. The hollow backwash conduit has a shaft 293 extending upwardly therefrom, which shaft passes through a bushing 295 in the cover 213, and a means 297 for adjusting of the tension of the scraper blade 287 against the inner surface 229 is provided, shown as an adjustment bar 299 and a coil spring 301 attached to the shaft 293 and adjustment bar 299. An adjustment screw 305 may be provided on support post 303 to contact the adjustment bar 299 and control the pressure of contact of the scraper blade 287 on the inner surface 229 of the strainer basket 219. The scraper blade 287 preferably extends outwardly from a base 307 thereof (Figure 9) which is flush with the wall 275 of the hollow backwash conduit 273. In order to provide further adjustability for the scraper blade 287 relative to the surface 229, and adjustability relative to the extension member 289, a series of vertically spaced lateral slots 309 (Figure 10) are provided in the base 307, through which bolts 311 are passed and secured in threaded bores 313 in the wall 275. Loosening and tightening of the bolts 311 enable movement and securement of the scraper blade 287 laterally. The size of the channel 291, and thus the volume of flow of backwash water therethrough to the chamber 277 is also adjustable by adjustable securement of the scraper blade 287 to the extension member 289. As illustrated, spaced threaded bolts 315 may be provided which pass through apertures 317 in the extension member 289 and are threadedly engaged in threaded bores 319 in the scraper blade 287. Spacers 321, such as washers about bolts 315, are used to stabilize the extension member 289 relative to the scraper blade 287 and the number and size of spacers 321 controls the width of the channel 291.

In order to further clean the inner surface 229 of the strainer basket 219, a rotatable brush 323 may be provided, supported in the strainer basket 219 and positioned to contact the inner surface 229. The rotatable brush 323 has a bristled portion 325, having bristles 327, carried by a brush shaft 329, the upper portion 331 of shaft 329 passing through an upper bushing 333 in the cover 213 on housing 203, while the lower portion 335 of shaft 329 is supported in a lower bushing 337 in the bottom wall 109 of the housing 103. The brush 323 may be rotated continuously in a direction opposite the direction of rotation of the strainer basket 219 through connection (not shown) with the shaft 257 of motor 259, but the rotatable brush 323 is preferably intermittently rotatable. In order to effect intermittent rotation of the brush 323, a cam 339 is attached to the upper portion 235 of the strainer basket 219 which will contact a flange 341 on a brush index member 343 that is fixed to the shaft 329 of the brush 323, such as by pin 345. The flange 341 is sized such that the brush 323 will be rotated about 45° each time that the strainer basket completes a 360° rotation. This assures that a clean surface of bristles 327 is provided for contact with the inner surface 229 of the wall 221 of strainer basket 219 and reduces wear on the bristles 327 as compared with continuous rotation of the brush 323. A brush ratchet 347 is preferably also provided on the shaft 329, such as a star wheel 349 adjacent the upper terminus 351 of the shaft 329, which engages with a spring loaded cleat 353. The star wheel 349 and spring loaded cleat 353 assure that the cam 339 is correctly aligned with the brush index member 335.

During operation of the strainer 201, as hereinbefore described, particulate material collects on the inner surface 229 of the strainer basket 219. To aid in removal of the particulate material, in addition to the scraper blade 287 and back flow through the hollow backwash conduit 273, the bristled brush 323 contacts the inner surface 229 and shears and brushes particulate material therefrom which flows by gravity to the flush discharge opening 211. The brush 323 is intermittently partially rotated, about 45° for each complete rotation of the basket to provide a clean brush surface for contact with the inner surface 229 of the foraminous side wall 221 of the strainer basket 219. Particulate material which falls through the open bottom 225 of the strainer basket 219 is discharged through the flush discharge opening 211. The flush discharge opening 211 may be open to an off-take continuously or a shear gate valve may be used to close the same when desired. If more flushing of the strainer basket and flush discharge opening 211 is desired, flush water may be charged through a flush water conduit (not shown) downwardly through the strainer basket 219. When the strainer basket 219 has been cleaned, the motor 259 is shut down and the rotation of the strainer basket 219 and rotatable brush 323 terminated, and the valve 283 closed to seal the hollow backwash conduit 273. The self-cleaning strainer may then be used to clean further particulate-laden water.

A cleaning operation may also be effected without interruption of service of the strainer by simply opening a shear gate valve attached to the flush discharge opening 211.

Also, the strainer may be cleaned by temporarily taking the strainer out of service by closing a valve in a conduit leading to inlet 215, as well as a valve in a conduit leading from outlet 217 and then opening a shear gate valve attached to the flush discharge opening 211. Flush water is then charged downwardly through the strainer basket 219 which will flush out debris through the flush discharge opening 211.

The cleaning of the strainer of the present invention can be effected, as above-described, by use of a pressure drop activated device, by a time activated device to periodically flush out the strainer, or by a device responding to any other preferred electrical or other signal.

A control panel may be provided that co-operates with the strainer and can be programmed for any type of flushing and in response to any desired signal, so that the user has great flexibility with respect to flushing procedures and the reason for a flushing cycle. Also, the allowable time for flushing can be pre-established and programmed into a control panel. Such a programmer is not necessary to any of the above cleaning procedures, since a user may tie it into the user's own system or effect such a cleaning procedure manually or semi-automatically. Use of such a control panel, however, allows for programming and automatic cleaning to suit a particular installation.

From the foregoing it will be appreciated that the preferred embodiment of the present invention provides a self-cleaning strainer where the apparatus used to rotate the strainer basket is positioned out of the flow of liquid containing particulates that is fed to the strainer basket.

Preferred embodiments of the present invention further provide a self-cleaning strainer having a combination scraper-backwash unit that enables adjustable backwashing of the inner surface of the wall of the strainer basket without the use of water-jet sprays.

A preferred embodiment of the invention also provides for intermittent rotation of a brush that is adapted to clean the inner surface of the wall of the strainer basket.

## Claims

1. A self-cleaning strainer(1,201) comprising a vertically disposed housing(3,203) having an upstanding side wall(5,205), an open top(7,207) and a bottom wall(9,209); said housing having an inlet(15,215) in the side wall for a liquid containing particulates, adjacent said open top, an outlet(17,217) in the side wall adjacent said bottom wall for clean liquid, and a flush discharge opening(11,211) in said bottom wall; a cover plate(13,213) sealingly closing the open top of said housing; a rotatable strainer basket(19,219), having a cylindrical foraminous side wall(21,221) with an inner surface and an open top and bottom, with openings through said cylindrical side wall for flow of liquid therethrough, disposed in said housing, spaced from said side wall of said housing and disposed below said inlet, such that liquid containing particulates entering said inlet passes into said strainer basket and outwardly through said openings to remove said particulates, and clean liquid is directed through said outlet; means(31,231) for rotating said strainer basket in said housing, said means for rotating being positioned out of the flow of liquid containing particulates, and means(71,271) for cleaning the inner surface of the cylindrical side wall of said strainer basket to remove particulates which are collected thereon.

2. The self-cleaning strainer as defined in Claim 1, where said means(71,271) for cleaning the inner surface of the cylindrical side wall of said strainer basket comprises a scraper blade(73,287), positioned to contact said inner surface, supported in said strainer basket in said housing.

3. The self-cleaning strainer as defined in Claim 1 or 2, wherein said means for cleaning the inner surface of the cylindrical side wall of said strainer basket comprises a rotatable bristled brush(101,323), positioned such that the bristles(103,325) on said brush contact said inner surface, supported in said strainer basket in said housing, said rotatable brush being rotatable at least in a direction opposite the rotation of said strainer basket.

4. A self-cleaning strainer as defined in Claim 3 wherein said rotatable bristled brush is intermittently rotatable.

5. The self-cleaning strainer as defined in any one of the preceding Claims wherein said means for cleaning the inner surface of the cylindrical side wall of said strainer basket comprises a water jet manifold(131), positioned in the spacing between said cylindrical side wall(21) and said side wall(5) of said housing(3), said water jet manifold having nozzles(135) through which water is sprayed through said openings in the cylindrical side wall of said strainer basket.

6. The self-cleaning strainer as defined in any one of the preceding Claims wherein the area of the space between the side wall of the housing and the cylindrical side wall of the strainer basket is greater than the cross-sectional area of the inlet.

7. A self-cleaning strainer as defined in any one of the preceding Claims, wherein said strainer basket has a top annular shoulder(37) on said cylindrical side wall, and an inwardly directed flange(39) is provided on the side wall of said housing which contacts said shoulder to form a closure therebetween, said top annular shoulder having a downwardly extending lip(49) having sprockets(51) thereon extending outwardly therefrom.

8. A self-cleaning strainer as defined in any one of the preceding Claims wherein said means(271) for cleaning includes a hollow backwash conduit(273) having an outer wall(275) defining a chamber(277), disposed in said rotatable strainer basket adjacent said inner surface thereof, said hollow backwash conduit having a passage(285) through the outer wall thereof facing said inner surface; an aperture in a wall(279) of said housing(203) communicating with said chamber(277) of said hollow backwash conduit; and means(281) to seal said aperture in said wall of said housing.

9. The self-cleaning strainer as defined in Claim 8 including a scraper blade(287) on one side of said passage(285) of said hollow backwash conduit(273), positioned to contact said inner surface and an extension member(289) on the other side of said passage on said backwash conduit extending towards said inner surface, said scraper blade and extension member being spaced from each other to form a channel(291) therebetween communicating through said passage(285) with the chamber(277) of said hollow backwash conduit(273).

10. The self-cleaning strainer as defined in Claim 7 wherein at least one of said scraper blade(287) and said extension member(289) is adjustably secured relative to the other to enable adjustment of the width of said channel.

11. The self-cleaning strainer as defined in Claim 2 or 9, or any Claim dependent thereon including means(89,93; 299,301) for varying the pressure of contact of said scraper blade on said inner surface.

12. A self-cleaning strainer(1) comprising a vertically disposed housing(3) having an upstanding side wall(5), an open top(7) and a bottom wall(9), said housing having an inlet(15) in the side wall for a liquid containing particulates, adjacent said open top, an outlet(17) in the side wall adjacent said bottom wall for clean liquid, a flush discharge opening(11) in said bottom wall and an inwardly directing flange on said side wall, a cover plate(13) sealingly closing the open top of said housing, a rotatable strainer basket(19), having a cylindrical foraminous side wall(21) with an inner surface and an open top and bottom, with openings through said cylindrical side wall for flow of liquid therethrough, disposed in said housing, spaced from said die wall of said housing and disposed below said inlet, said strainer basket having a top annular shoulder(37) with a downwardly extending lip(49) thereon having sprockets(51) extending outwardly therefrom, which annular shoulder contacts said inwardly directed flange(39) on the side wall of said housing to form a closure therebetween, such that liquid containing particulates entering said inlet passes into said strainer basket and outwardly through said openings to remove said particulates, and clean liquid is directed through said outlet, means(31) for rotating said strainer basket in said housing, out of the flow of liquid containing particulates comprising a rotatable sprocket wheel(55), and a chain(61) engaged with said sprocket wheel and said sprockets on said strainer basket, and means(71) for cleaning the inner surface of the cylindrical side wall of said strainer basket to remove particulates which are collected thereon.

13. A self-cleaning strainer(201) comprising a vertically disposed housing(203) having an upstanding side wall(205), an open top(207) and a bottom wall(209), said housing having an inlet(215) in the side wall for a liquid containing particulates, adjacent said open top, an outlet(217) in the side wall adjacent said bottom wall for clean liquid, and a flush discharge opening(211) in said bottom wall, a cover plate(213) sealingly closing the open top of said housing, a rotatable strainer basket(219), having a cylindrical foraminous side wall(221) with an inner surface and an open top and bottom, with openings through said cylindrical side wall for flow of liquid therethrough, disposed in said housing, spaced from said side wall of said housing and disposed below said inlet, such that liquid containing particulates entering said inlet passes into said strainer basket and outwardly through said openings to remove said particulates, and clean liquid is directed through said outlet, means(23) for rotating said strainer basket in said housing, said means for rotating being positioned out of the flow of liquid containing particulates, and means(271) for cleaning the inner surface of the cylindrical side wall of said strainer basket to remove particulates which are collected thereon, said means for cleaning including a hollow backwash conduit(273) having an outer wall(275) defining a chamber(277) disposed in said rotatable strainer basket adjacent said inner surface thereof, said hollow backwash conduit having a passage(285) through the outer wall thereof facing said inner surface, a scraper blade(287) on one side of said passage(285) on said hollow backwash conduit(273), positioned to contact said inner surface, and an extension member(289) on the other side of said passage on said hollow backwash conduit extending towards said inner surface, said scraper blade and extension member spaced from each other to form a channel(291) therebetween communicating through said passage(285) with the chamber(277) of said hollow backwash conduit(273), an aperture in a wall(279) of said housing(203) communicating with said chamber(277) of said hollow backwash conduit, and means(281) to seal said aperture in said wall of said housing.
